# FASCICULE DE BREVET EUROPEEN

(11) **EP 3 084 934 B1**
(45) Date de publication et mention de la délivrance du brevet: **31.08.2022**
(21) Numéro de dépôt: 14827481.4
(22) Date de dépôt: 09.12.2014
(51) Int. Cl.: H02K 9/20, H02K 19/38

(54) **MÉTHODE DE REFROIDISSEMENT D'UNE GÉNÉRATRICE ÉLECTRIQUE ET DISPOSITIF POUR LA MISE EN OEUVRE DE CETTE MÉTHODE**
VERFAHREN ZUR KÜHLUNG EINES ELEKTRISCHEN GENERATORS UND VORRICHTUNG ZUR IMPLEMENTIERUNG DIESES VERFAHRENS
METHOD FOR COOLING AN ELECTRIC GENERATOR AND DEVICE FOR IMPLEMENTING SAID METHOD

(30) Priorité: 16.12.2013 FR 1362694
(43) Date de publication de la demande: 26.10.2016
(73) Titulaire: Safran Electrical & Power, 31702 Blagnac Cedex (FR)
(72) Inventeur: SALAT, Jacques, F-77170 Brie Comte Robert (FR); CHASTAGNIER, Jean-Michel, F-91640 Briis Sous Forges (FR)
(74) Mandataire: Cabinet Beau de Loménie
(86) Numéro de dépôt international: PCT/FR2014/053235
(87) Numéro de publication internationale: WO 2015/092215

(56) Documents cités:
- EP-A1- 2 390 183
- EP-A2- 2 276 151
- FR-A1- 2 189 915
- FR-A1- 2 474 780
- GB-A- 2 217 118
- US-A- 2 330 121
- US-A1- 2009 096 300

## Description

L'invention concerne un dispositif comportant une structure fixe, un premier rotor apte à être mis en rotation par rapport à la structure fixe, une génératrice électrique prévue pour alimenter le premier rotor en énergie électrique, et un système de refroidissement pour évacuer la chaleur produite par la génératrice électrique.

L'invention concerne plus particulièrement le cas où le premier rotor est la voilure d'un hélicoptère ; l'habitacle de l'hélicoptère constitue alors la structure fixe du dispositif.

De manière connue en soi, un hélicoptère peut comporter un dispositif de dégivrage (de-icing) des pales de son rotor. Un tel dispositif comporte le plus souvent un ensemble de résistances disposées dans les pales.

Ces résistances sont alimentées en courant habituellement via un collecteur tournant situé entre la voilure (le premier rotor) et l'habitacle (la structure fixe) de l'hélicoptère.

Le courant alimentant ces résistances peut être fourni par une génératrice dédiée. Cette génératrice est une génératrice de relativement forte puissance (la puissance peut atteindre 10 à 15 kW). Par suite, cette génératrice dégage une chaleur importante, par effet Joule et/ou par hystérésis dans ses parties magnétiques.

On équipe donc habituellement l'hélicoptère d'un système de refroidissement de la génératrice électrique, par exemple par circulation d'huile.

Cette solution technique est cependant peu satisfaisante. En effet, le refroidissement par huile de la génératrice augmente la complexité, le coût et le poids de l'hélicoptère, au détriment des performances de celui-ci.

Par ailleurs, différents systèmes de refroidissement, pour différents types de moteurs, sont par exemple divulgués par les documents EP 2276151, FR2189915, FR2474780, GB2217118, US 2009/096300, EP2390183 et US 2 330 121.

Il existe donc, au moins dans le domaine des hélicoptères, un besoin pour un dispositif tel que présenté précédemment, dont le système de refroidissement soit allégé et simplifié par rapport aux systèmes à circulation d'huile utilisés actuellement.

De manière plus générale, le but de l'invention est donc de proposer un dispositif du type présenté en introduction, dans lequel une génératrice électrique alimente en électricité un rotor dit premier rotor, dont le système de refroidissement soit simple, fiable et léger, et cela tout en ayant une grande efficacité pour l'évacuation de la chaleur produite par la génératrice électrique.

Ce but est atteint grâce au dispositif défini par la revendication 3, notamment par le fait que dans le dispositif, la génératrice électrique est disposée dans une chambre aménagée à l'intérieur du premier rotor, et que le système de refroidissement comprend un circuit de circulation d'un fluide caloporteur diphasique, reliant un évaporateur couplé thermiquement à la génératrice électrique à un condenseur apte à évacuer de la chaleur vers le milieu extérieur au premier rotor.

En effet, le circuit de circulation d'un fluide diphasique avec condenseur et évaporateur est un moyen relativement simple et léger pour constituer un système de refroidissement.

Par 'fluide caloporteur diphasique', on entend un fluide susceptible de se vaporiser et de se condenser de manière à réaliser des échanges de chaleur et à réaliser la fonction de transfert de chaleur attendue d'un fluide caloporteur.

L'utilisation d'un système de refroidissement transférant la chaleur à l'aide d'un fluide caloporteur (généralement autre que l'air) permet de transférer en général - mais pas nécessairement - de façon totalement passive (c'est-à-dire, sans pièce tournante) une quantité de chaleur par unité de temps beaucoup plus importante que si le transfert de chaleur n'était fondé que sur la conduction, sans déplacement de fluide.

De plus, l'utilisation conjointe d'un condenseur et d'un évaporateur permet d'accroître encore la performance en termes de puissance de transfert de chaleur. En effet, avantageusement dans le système de refroidissement selon l'invention les changements d'état du fluide caloporteur sont exploités pour accroître la quantité de chaleur transférée par le système de refroidissement.

Un évaporateur désigne ici un échangeur de chaleur dans lequel le fluide caloporteur reçoit de la chaleur et emmagasine celle-ci notamment en se vaporisant.

Un condenseur désigne ici un échangeur de chaleur dans lequel le fluide caloporteur fournit de la chaleur notamment en se condensant.

Le fait que le dispositif soit couplé thermiquement à l'évaporateur signifie qu'au moins une grande portion de la chaleur dégagée par la génératrice électrique lors de son fonctionnement se communique à l'évaporateur, notamment, au moins 70% de la chaleur dégagée.

Ainsi dans le système de refroidissement selon l'invention, le fluide reçoit de la chaleur dans l'évaporateur et se vaporise ; il circule alors, en phase vapeur jusqu'au condenseur, où il libère la chaleur emmagasinée en se condensant ; il retourne alors en phase liquide jusqu'à l'évaporateur.

Un avantage important du dispositif selon l'invention est que les moyens d'alimentation en énergie électrique du rotor sont particulièrement compacts, puisque la génératrice est située dans une chambre aménagée à l'intérieur même du rotor.

Cet agencement est rendu possible grâce au système de refroidissement décrit précédemment, qui assure l'évacuation de la chaleur dégagée par la génératrice et permet ainsi que la température atteinte par les organes internes de la génératrice ne dépasse pas une valeur maximale acceptable.

L'agencement de l'évaporateur et du condenseur par rapport au premier rotor peut être réalisé de différentes manières.

De préférence, le condenseur est tournant et fait partie du premier rotor. Ainsi, le condenseur peut être agencé de manière à avoir une surface externe en contact direct avec l'air (ou le fluide) environnant le rotor. Cet agencement permet ainsi que le condenseur évacue efficacement la chaleur apportée par le fluide en la communiquant directement au fluide environnant le rotor.

Dans le dispositif selon l'invention, l'évaporateur est tournant et fait partie du premier rotor. Plus précisément, l'évaporateur est fixé sur une partie tournante de la génératrice solidaire en rotation du premier rotor. L'intérêt de cet agencement est qu'il permet de manière simple de réaliser le circuit de circulation de fluide caloporteur reliant l'évaporateur au condenseur.

Le système de refroidissement tout entier peut ainsi être tournant et faire partie du premier rotor.

Dans certains modes de réalisation, le premier rotor peut atteindre des vitesses de rotation relativement importantes. Pour réduire les sollicitations auxquelles est soumis le système de refroidissement, il est préférable qu'au moins le condenseur et/ou l'évaporateur soient disposés de manière axisymétrique par rapport à l'axe de rotation du premier rotor.

Dans un mode de réalisation, dans le cas où le système de refroidissement tout entier est tournant et fait partie du premier rotor, le premier rotor comporte une partie tubulaire contenant la chambre ; et le système de refroidissement et éventuellement un rotor de la génératrice électrique sont fixés de manière à pouvoir être extraits via une extrémité de la partie tubulaire.

De préférence, le système de refroidissement, et éventuellement le rotor de la génératrice sont fixés mécaniquement uniquement à l'extrémité de la partie tubulaire (sans aucune autre liaison mécanique) : ils peuvent ainsi être démontés relativement aisément depuis cette extrémité de la partie tubulaire.

Dans un mode de réalisation, la génératrice est placée de manière axisymétrique sur l'axe de rotation du premier rotor.

Elle peut être entourée par l'évaporateur de manière à permettre le couplage thermique entre la génératrice et l'évaporateur.

Dans un mode de réalisation, la génératrice et le système de refroidissement sont sans contact avec une paroi circonférentielle de la chambre.

Dans un mode de réalisation, pour permettre le couplage thermique entre la génératrice et l'évaporateur, l'évaporateur comporte au moins un conduit de circulation de fluide, notamment en forme de spire, passant à l'intérieur de la génératrice électrique et permettant la circulation et la vaporisation du fluide. Le passage du fluide à l'intérieur même de la génératrice permet un échange thermique particulièrement efficace entre celle-ci et l'évaporateur.

Cependant, il est souvent suffisant que le fluide circule sur la périphérie de la génératrice.

Ainsi dans un mode de réalisation, l'évaporateur comprend au moins un passage de circulation de fluide délimité par une paroi d'un carter externe de la génératrice et permettant la circulation et la vaporisation du fluide. Le ou de préférence les passages de circulation de fluide permettent alors la vaporisation du fluide en ne faisant circuler le fluide qu'à l'extérieur du rotor de la génératrice.

Dans un mode de réalisation, le carter présente une paroi double, et le ou les passages de circulation de fluide sont agencés entre une paroi interne et une paroi externe du carter. Le terme 'paroi double' signifie ici que la chambre présente deux parois superposées sensiblement parallèles. Avantageusement, ce mode de réalisation permet de réaliser des passages de manière relativement simple dans l'espace séparant la paroi interne de la paroi externe.

De préférence dans ce cas, le système de refroidissement comporte des entretoises agencées de manière à maintenir une distance constante entre les deux parois. Ces entretoises peuvent prendre la forme de simples plots. Selon une variante, *au moins deux des entretoises sont allongées, et définissent ledit passage ou l'un desdits passages.*

Les entretoises ont alors un double-rôle : Elles maintiennent les parois constituant la chambre en position relative fixe, et définissent ou délimitent les passages de fluide.

Le carter de la génératrice peut avoir différentes formes.

De préférence, le carter a une forme tubulaire et s'étend suivant l'axe de rotation du premier rotor. Par « tube » (ou « partie tubulaire »), on désigne ici une pièce allongée s'étendant suivant un axe, et sur l'axe de laquelle est formé un passage. Un tube peut néanmoins être bouché à l'une et/ou l'autre de ses extrémités. Un tube peut notamment avoir une forme de révolution, en particulier cylindrique ou conique.

Le ou les passages peuvent être agencés de différentes manières dans le carter.

Dans un mode de réalisation, l'évaporateur présente une pluralité de passages parallèles à un axe du carter et répartis sur la circonférence de celui-ci. La chambre peut alors être fabriquée de manière particulièrement simple.

Selon une variante, le ou les passages peuvent former un angle constant par rapport à l'axe. Ils ont alors une forme hélicoïdale qui permet de favoriser le retour de fluide vers l'évaporateur.

Dans un mode de réalisation, le circuit de circulation de fluide présente un orifice de remplissage unique pour le remplissage en fluide de l'ensemble du circuit de fluide. Cette disposition facilite la maintenance du système de refroidissement de la génératrice électrique.

Les moyens pour faire circuler le fluide dans les conduits du circuit de circulation de fluide entre l'évaporateur et le condenseur vont maintenant être présentés.

De préférence, ces moyens sont passifs, c'est-à-dire ne comportent pas de pompe. Le fluide est donc mis en mouvement soit par gravité, et/ou par la force centrifuge.

Dans un mode de réalisation, le premier rotor est prévu pour être mis en rotation autour d'un axe de rotation sensiblement vertical, et lorsqu'il est dans cette position, le condenseur est disposé par rapport à la direction verticale au-dessus de l'évaporateur. Dans ces conditions, le fluide en phase liquide condensé dans le condenseur redescend par gravité dans l'évaporateur. Là, il est vaporisé ; sous l'effet de la différence de masse volumique entre la phase liquide et la phase vapeur, le fluide vaporisé dans l'évaporateur remonte spontanément sous l'effet de la poussée d'Archimède dans le condenseur. Ainsi, la circulation de fluide se maintient de manière spontanée simplement du fait des changements d'état du fluide dans le condenseur et l'évaporateur.

De préférence, les conduits reliant l'évaporateur et le condenseur, sont réalisés de telle sorte que lorsque le fluide circule du condenseur vers l'évaporateur, il se déplace toujours en descendant, vers le bas. Cela signifie donc notamment que les conduits aménagés entre l'évaporateur et le condenseur ne présentent pas de coude imposant au fluide de remonter. Cet agencement évite la formation de poches ou de retenues de liquide dans les conduits.

Selon une variante, le condenseur et l'évaporateur sont disposés de manière à être décalés radialement l'un par rapport à l'autre, l'évaporateur étant formé à une distance radiale par rapport à l'axe de rotation supérieure à celle à laquelle est disposé le condenseur. La force centrifuge est ainsi utilisée pour favoriser la circulation du fluide dans le système de refroidissement.

Le condenseur et l'évaporateur peuvent être notamment des corps ayant une forme de révolution. Ils peuvent être par exemple des corps cylindriques présentant des diamètres différents l'un de l'autre.

En effet, lorsque le système de refroidissement est mis en rotation, la force centrifuge tend à diriger le fluide en phase liquide dans les parties du système de refroidissement de plus grand diamètre, et donc dans l'évaporateur. Sous l'effet de la pression du fluide en phase liquide, le fluide en phase vapeur est contraint de circuler en sens inverse et de rejoindre le condenseur. Le fluide est ainsi mis en mouvement dans le système de refroidissement.

De préférence, les conduits reliant l'évaporateur et le condenseur sont réalisés de telle sorte que lorsque le fluide circule du condenseur à l'évaporateur, il se déplace toujours radialement dans le même sens et ne fasse que s'éloigner de l'axe ou rester à distance constante de celui-ci. Cet agencement évite la formation de poches ou de retenues de liquide dans les conduits.

Un mode de réalisation de système de refroidissement permettant un tel fonctionnement du système de refroidissement (c'est-à-dire, avec mise en circulation du fluide sous l'effet de la rotation du système de refroidissement) consiste à agencer le ou les conduits reliant l'évaporateur au condenseur (et éventuellement le ou les passages de circulation de fluide de l'évaporateur) sur une surface sensiblement conique. Il s'agit ici d'une surface au sens mathématique, qui n'est pas nécessairement une surface réelle. Le fluide peut circuler dans un tube en forme de serpentin.

Dans ce mode de réalisation, lorsque la chambre est entraînée en rotation, sous l'effet des forces centrifuges, le fluide en phase liquide s'accumule dans l'extrémité de plus grand diamètre du circuit de circulation de fluide. L'évaporateur de fluide est naturellement agencé dans cette extrémité du circuit de circulation de fluide.

L'énergie électrique générée par la génératrice électrique peut être produite de différentes manières. Dans le dispositif selon l'invention, elle est produite notamment en exploitant une différence de vitesse entre deux rotors coaxiaux.

Le dispositif comporte en effet un deuxième rotor, le premier et le deuxième rotor étant en rotation par rapport à la structure du dispositif à des vitesses de rotation respectives différentes l'un de l'autre ; et la génératrice électrique présente un mode de fonctionnement dans lequel elle produit de l'énergie électrique par rotation relative du deuxième rotor par rapport au premier rotor. Cet agencement est surtout intéressant lorsque le deuxième rotor présente une vitesse de rotation élevée par rapport à celle du premier rotor.

Dans le dispositif selon l'invention, le deuxième rotor est coaxial au premier rotor et disposé à l'intérieur de celui-ci, une partie de la génératrice faisant alors partie du deuxième rotor.

Enfin, l'invention concerne également une méthode de refroidissement d'une génératrice électrique prévue pour alimenter un premier rotor en énergie électrique, le premier rotor étant apte à être mis en rotation par rapport à une structure fixe, dans laquelle la génératrice électrique est disposée dans une chambre aménagée à l'intérieur du premier rotor. Cette méthode est définie par la revendication 1 ; elle comprend les étapes suivantes :
a) on transfère une chaleur produite par la génératrice à un fluide caloporteur en vaporisant le fluide dans un évaporateur fixé sur une partie tournante de la génératrice solidaire en rotation du premier rotor ;
b) on transporte le fluide vaporisé jusqu'à un condenseur ;
c) on condense le fluide dans le condenseur, la chaleur fournie par le fluide étant transmise à l'air environnant le condenseur.

La méthode de refroidissement précédente peut notamment être mise en œuvre en disposant le condenseur plus haut que l'évaporateur, et notamment au-dessus de l'évaporateur, afin de permettre le retour de fluide condensé du condenseur à l'évaporateur simplement par gravité.

Dans un mode de mise en œuvre, l'étape c) de condensation de fluide est réalisée dans un condenseur tournant faisant partie du premier rotor.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique partielle de la voilure d'un hélicoptère selon l'invention ;
- la figure 2 est une vue en perspective partielle du système de refroidissement intégré au rotor de l'hélicoptère de la figure 1 ;
- la figure 3 est une autre vue en perspective partielle du système de refroidissement intégré au rotor de l'hélicoptère de la figure 1 ;
- la figure 4 est une vue en coupe axiale du système de refroidissement et de la génératrice électrique intégré au rotor de l'hélicoptère de la figure 1 ; et
- la figure 5 est une vue schématique en coupe longitudinale d'un système de refroidissement équipant un hélicoptère formant un deuxième mode de réalisation de l'invention.

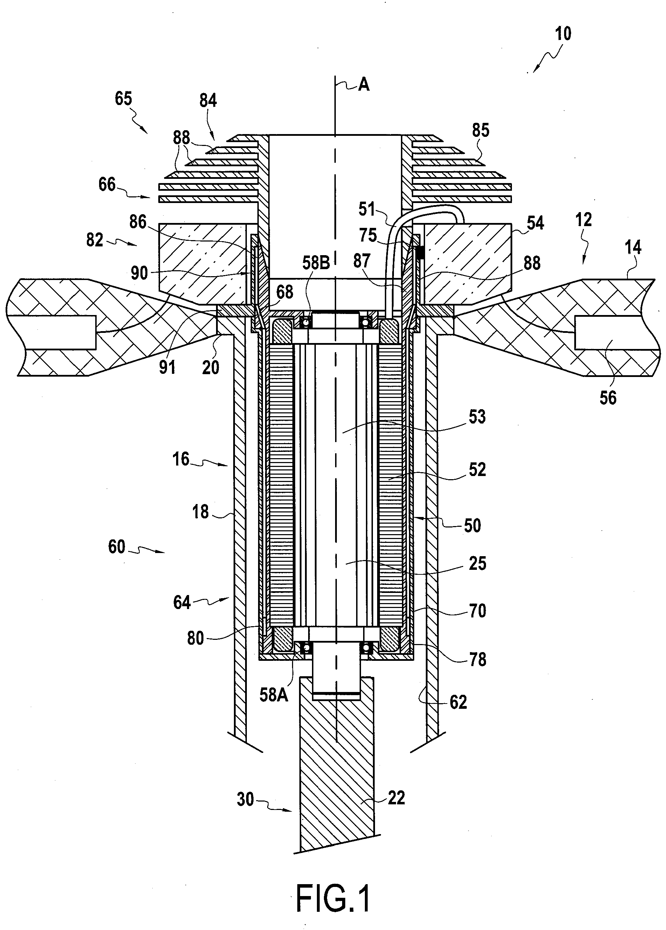

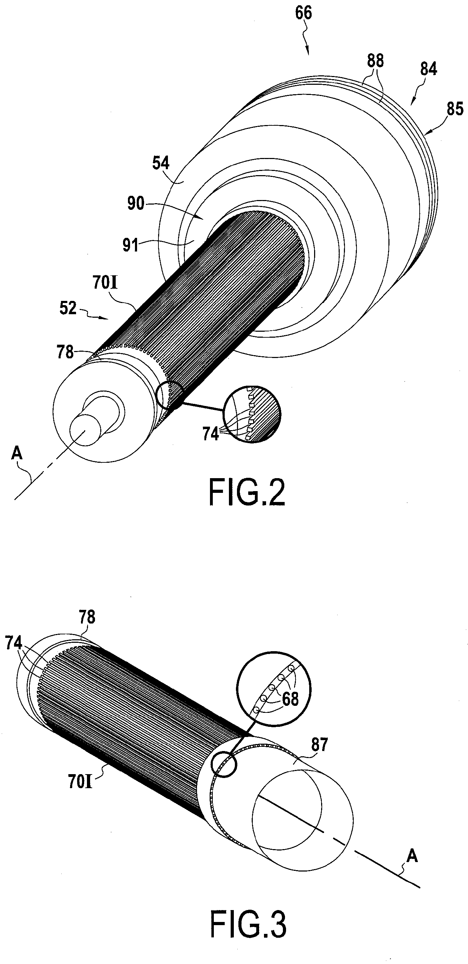

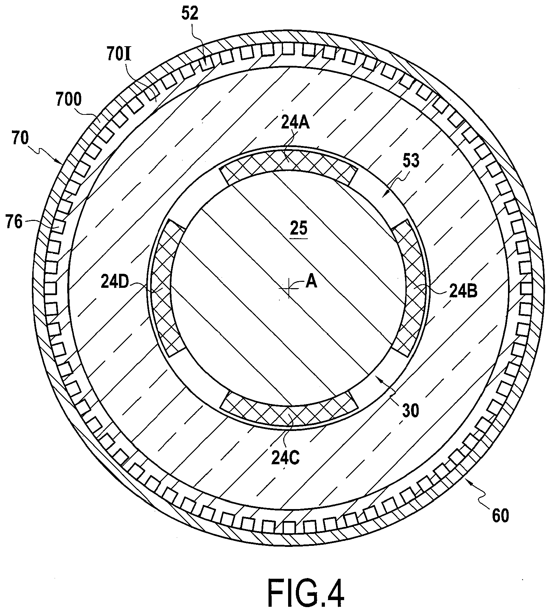

En faisant référence aux figures 1 à 4, un hélicoptère 10 comprenant un système de refroidissement dans un premier mode de réalisation de l'invention va maintenant être décrit.

L'hélicoptère 10 comprend un habitacle non représenté, supporté en vol par une voilure tournante 12. Celle-ci est constituée par un ensemble de pales 14 fixées sur la périphérie d'un moyeu 16.

Le moyeu 16 est constitué principalement de deux parties formées intégralement, à savoir un arbre tubulaire 18, et une bride de fixation 20. Le moyeu 16 présente globalement une forme cylindrique, définie autour d'un axe de rotation A normalement dirigé suivant la direction verticale.

La voilure 12 est entraînée en rotation de la manière suivante : L'arbre de sortie du moteur thermique de l'hélicoptère (non représenté) entraine en rotation l'arbre 18 du moyeu 16, via une transmission mécanique. Le moyeu 16 transmet alors le mouvement de rotation aux pales 14. En vol, la vitesse de rotation de la voilure 12 est de l'ordre de quelques centaines de tours par minute.

En parallèle, la transmission mécanique entraîne également en rotation autour de l'axe A un second arbre de sortie 22, coaxial à l'arbre 18 et disposé à l'intérieur de celui-ci. En vol, la vitesse de rotation de l'arbre 22 est de l'ordre de plusieurs milliers de tours par minute.

Conventionnellement on appelle ci-dessous premier rotor (60) l'ensemble des pièces de l'hélicoptère liées à l'arbre 18, à vitesse de rotation relativement faible, et deuxième rotor (30) l'ensemble des pièces liées à l'arbre 22, à vitesse de rotation relativement élevée. Les vitesses de rotation sont mesurées par rapport à l'habitacle de l'hélicoptère, qui constitue la structure fixe de celui-ci.

L'écart de vitesse de rotation entre les arbres 18 et 22 permet de produire de l'énergie électrique au moyen d'une génératrice électrique 50.

Celle-ci est disposée à l'intérieur de l'arbre 18 qui constitue une 'partie tubulaire' au sens de l'invention.

La génératrice 50 est constituée :
- par une partie statorique 52 faisant partie du premier rotor 60, constituée par un ensemble de bobinages agencés autour de corps en matériau ferromagnétique (en pratique ces corps sont stratifiés et formés de tôles de matériau ferromagnétique) ;
- par une partie rotorique 53 faisant partie du rotor 30, comprenant un noyau axial 25 en acier fixé dans le prolongement de l'arbre d'entraînement 22, et quatre aimants permanents 24A, 24B, 24C et 24D ; et
- par un carter 70, solidaire en rotation de la partie statorique 52, et dont les fonctions seront précisées plus loin.

La partie 'statorique' 52 est nommée ainsi car sa vitesse de rotation est bien plus faible que celle de la partie rotorique 53.

Lorsque le deuxième rotor 30 est entraîné en rotation relative par rapport au premier rotor 60, la génératrice 50 produit un courant électrique. Ce courant est délivré par des fils électriques 51 à une unité de distribution électrique 54.

L'unité de distribution électrique 54 sert à distribuer le courant produit par la génératrice 50 à des résistances chauffantes 56 disposées au niveau des pales 14.

Lorsque les conditions atmosphériques entraînent la formation d'une couche de glace sur les pales, la génératrice 50 est utilisée pour produire du courant électrique. Ce courant est distribué aux résistances 56. Sous l'effet de ce courant, les résistances 56 s'échauffent par effet Joule ; l'échauffement produit permet de faire fondre ou de prévenir la formation d'une couche de glace indésirable sur les pales 14.

Le maintien en position relative et la rotation relative entre le premier rotor 60 et le deuxième rotor 30 sont assurés par deux paliers à billes 58A et 58B. Ceux-ci sont disposés respectivement à l'extrémité basse et à l'extrémité haute de la génératrice 50.

D'autre part, la génératrice est disposée à l'intérieur de l'arbre 18. La cavité intérieure de cet arbre constitue une chambre ou cavité 62, de forme cylindrique.

La génératrice 50 étant placée à l'intérieur de cet espace confiné, l'évacuation de la chaleur dégagée par son fonctionnement (plusieurs centaines de Watts) est difficile.

La présence d'un système d'évacuation de chaleur est donc absolument nécessaire.

Dans l'hélicoptère 10, le système d'évacuation de chaleur est constitué par un système de refroidissement 65 intégré au premier rotor 60 et entièrement solidaire en rotation de celui-ci. Ce système de refroidissement 65 comprend deux composants principaux : un évaporateur 64 et un condenseur 66, reliés par des conduits 68 de manière à constituer un circuit de circulation de fluide caloporteur.

L'évaporateur 64 sert à absorber la chaleur dégagée par la génératrice 50. Pour cela, il est disposé autour de la génératrice, dans l'épaisseur du carter cylindrique 70 de celle-ci.

Le carter 70 est formé en matériau conducteur de la chaleur, par exemple en aluminium, pour permettre que l'évaporateur soit couplé thermiquement avec la génératrice électrique et absorbe la chaleur dégagée par celle-ci.

Le carter 70 présente ainsi une double paroi, à savoir une paroi intérieure 70I et une paroi extérieure 70O. Les deux parois 70I et 70O sont cylindriques et coaxiales d'axe A. Le diamètre intérieur de la paroi 70I est sensiblement égal au diamètre extérieur de la partie statorique 52, pour minimiser la résistance thermique à l'interface entre le carter 70 et la partie statorique 52.

Les deux parois 70I et 70O sont séparées et maintenues à distance constante l'une de l'autre par des nervures droites allongées 74, qui constituent des entretoises au sens de l'invention. Ces nervures sont formées sur la surface externe de la paroi intérieure 70I du carter 70. La paroi 70O n'est pas formée intégralement avec la paroi interne 70I, mais formée séparément et rapportée par frettage. Cette conception conduit à aménager entre les nervures 74 de multiples passages 76 parallèles à l'axe A. Ces passages s'étendent sensiblement de bas en haut (dans la position normale de l'hélicoptère) de l'évaporateur 64.

La paroi interne 70I présente en partie basse un épaulement annulaire circonférentiel externe 78. Les nervures 74 s'arrêtent axialement (en référence à l'axe A) à une certaine distance de cet épaulement. Par suite, lorsque la paroi externe 70O est fixée sur la paroi interne 70I, une enceinte annulaire 80 se trouve formée en bas du carter 70, entre l'épaulement 78 et les nervures 74.

Du côté haut de l'évaporateur 64, les différents passages de fluide 76 sont reliés respectivement à des conduits d'échange de fluide 68, qui permettent l'échange de fluide avec le condenseur 66.

Ces conduits 68 sont formés dans l'épaisseur de la partie supérieure du carter 70, qui se prolonge au-dessus de la génératrice 50.

Le condenseur 66 a pour fonction d'évacuer à l'extérieur de l'hélicoptère 10 la chaleur prélevée sur la génératrice 50 par le fluide circulant dans l'évaporateur 64. Dans ce but, le condenseur 66 comporte une portion de condensation 82 reliée à un radiateur 84.

La portion de condensation 82 a la forme d'un tronçon de tube cylindrique, d'axe A. Dans l'épaisseur de la portion de condensation 82 est aménagée une enceinte annulaire de condensation 86.

Cette enceinte 86 est formée entre deux parois cylindriques concentriques : la paroi intérieure 87, constituée par l'extrémité supérieure du carter 70, et une paroi extérieure 88, formée dans une pièce de maintien 90.

La pièce de maintien 90 comprend la paroi cylindrique 88, dans laquelle est formée l'enceinte 86. Elle est fixée au premier rotor 60 par l'intermédiaire d'une bride 91 vissée sur la bride 20.

Le radiateur 84 est en forme de champignon, avec un chapeau 85 présentant de multiples ailettes de refroidissement 88. Le plan du chapeau 85 est perpendiculaire à l'axe A du premier rotor 60.

Le radiateur 84 ainsi que le carter 70 de la génératrice 50 sont fixés sur la pièce de maintien 90. Le carter 70 est en outre fixé rigidement à la partie statorique 52 de la génératrice 50.

Par conséquent, l'ensemble du système de refroidissement 65 (à savoir l'évaporateur 64, le condenseur 66, et les conduits 68 formés dans la partie supérieur du carter 70) est fixé via la pièce de maintien 90 sur la bride 20.

Ainsi avantageusement, pour réaliser la maintenance de ces équipements il est possible de les extraire simultanément de l'arbre 18 de l'hélicoptère 10, en les dégageant de l'arbre 18 vers le haut suivant l'axe A après avoir désolidarisé la pièce de maintien 90 de la bride 20.

La maintenance de la génératrice 50 et/ou du système de refroidissement 65 est donc particulièrement simple à réaliser. En outre, le remplissage du système de refroidissement 65 en fluide caloporteur se fait par un orifice unique 75.

Celui-ci est aménagé dans la paroi externe 87 de la portion de condensation 82.

Le système de refroidissement 65 fonctionne de la manière suivante.

Lorsque l'hélicoptère fonctionne, et que sa voilure tourne, la génératrice 50 dégage de la chaleur, qui se communique par conduction au carter 70.

Les enceintes annulaires 80 et 86 ainsi que les passages 76 sont remplis de fluide caloporteur, en l'occurrence de l'acétone. Le fluide caloporteur est choisi de telle sorte que sa température de vaporisation soit compatible avec les plages de température susceptibles d'être atteintes par la génératrice et par le radiateur lors du fonctionnement de l'hélicoptère.

Lorsque la génératrice 50 fonctionne et fournit du courant, la température s'élève dans la chambre 72. Sous l'effet de la chaleur, le fluide se vaporise dans l'enceinte 80 et les passages 76. La différence de masse volumique du fluide entre l'état liquide et l'état gazeux suffit alors pour que le fluide en phase gazeuse, vaporisé dans l'évaporateur 64, se déplace spontanément dans les passages 76 et les conduits 68 pour rejoindre l'enceinte annulaire 86.

Cette enceinte reste à une température relativement faible, du fait que les ailettes de refroidissement 88 sont refroidies en permanence au contact de l'air brassé par les pales de l'hélicoptère. La température du radiateur reste ainsi relativement tempérée et par conduction, il en va de même pour la portion de condensation 82. Par suite, le fluide en phase vapeur qui arrive dans l'enceinte 86 se condense dans cette enceinte. Le fluide liquide redescend alors simplement par gravité, via les conduits 68 et les passages 76, jusqu'à l'enceinte 80.

On comprend que le mouvement du fluide est autoentretenu dans le système de refroidissement 65. Ce mouvement permet avantageusement d'évacuer de la génératrice une quantité de chaleur très importante par unité de temps.

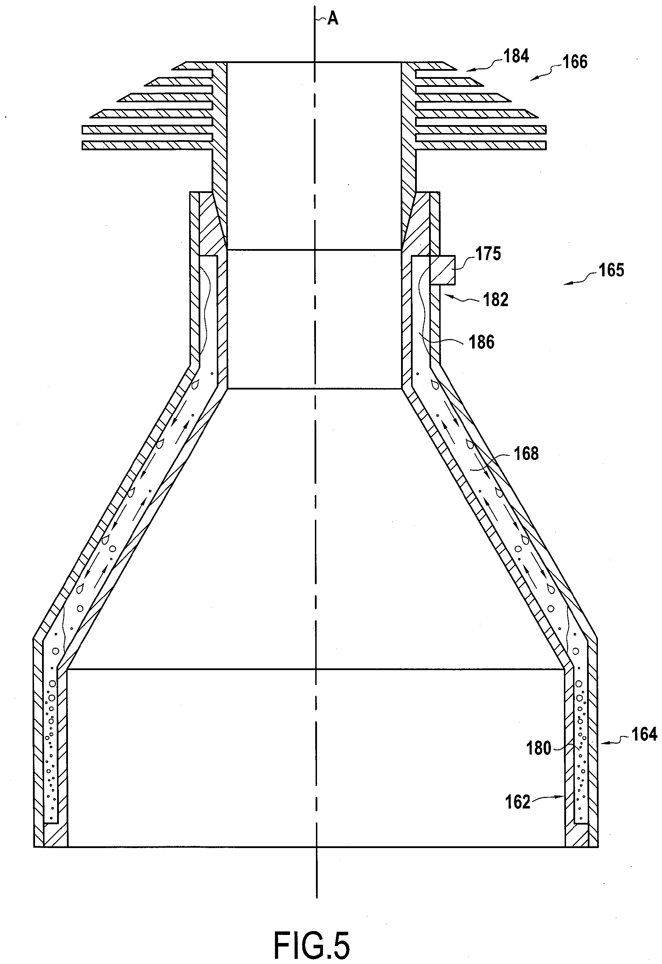

La figure 5 montre un autre mode de réalisation de l'invention. Celui-ci illustre un mode de réalisation de l'invention dans lequel la force centrifuge est utilisée pour provoquer la circulation de fluide dans le système de refroidissement.

Sur cette figure, les éléments identiques ou similaires aux éléments correspondants du premier mode de réalisation portent la référence de ces éléments, augmentée de 100.

Sur la figure 5 est représenté un système de refroidissement 165 comprenant un évaporateur 164 et un condenseur 166, reliés par des conduits 168.

L'évaporateur 164 a la forme d'un tronçon de tube cylindrique, d'axe A. Dans sa paroi est aménagée une enceinte annulaire de vaporisation 180, dans laquelle se produit la vaporisation du fluide. La paroi intérieure de l'évaporateur 164 (ou de l'enceinte 180) délimite une chambre cylindrique 162 formée à l'intérieur de l'évaporateur 164.

Dans cette chambre 162 est disposé une génératrice électrique non représentée, analogue à la génératrice 50.

Le condenseur 166 est réalisé de manière très similaire au condenseur 66, avec une portion de condensation 182 dont la paroi contient une enceinte annulaire de condensation 186, et qui est reliée à un radiateur à ailettes 184.

Le système de refroidissement 165 fonctionne de manière similaire au système de refroidissement 65.

En fonctionnement, le système de refroidissement tout entier, ainsi que la génératrice électrique, sont mis en rotation autour de l'axe A.

En ce qui concerne le fonctionnement du système de refroidissement 165, la seule différence par rapport au système de refroidissement 65 concerne la mise en circulation du fluide.

En effet, dans le système de refroidissement 165 le fluide est mis en circulation sous l'effet de la force centrifuge :
Quand le système de refroidissement 165 est entraîné en rotation, les forces centrifuges s'appliquent sur le fluide qui emplit les enceintes 180 et 186, et les conduits 168. Le fluide en phase liquide étant de masse volumique plus élevée que le fluide en phase gazeuse, le fluide en phase liquide tend à revenir dans l'évaporateur ; par suite, le fluide en phase gazeuse tend à revenir dans le condenseur. Ce double mouvement entretient donc une circulation de fluide spontanée dans le système de refroidissement 165.

La circulation du fluide est facilitée par le fait que les conduits 168 sont des conduits rectilignes, qui relient les périphéries respectives des enceintes 180 et 186. Les conduits 168 sont ainsi formés à la surface d'une surface conique. Comme ils sont rectilignes, le fluide circulant du condenseur au évaporateur se déplace à distance croissante de l'axe A. Ainsi, la formation de poches ou retenues de fluide est évitée.

## Revendications

1. Méthode de refroidissement d'une génératrice électrique (50) prévue pour alimenter un premier rotor (60) en énergie électrique, le premier rotor étant apte à être mis en rotation par rapport à une structure fixe, dans laquelle :
la génératrice électrique est disposée dans une chambre (62 ;162) aménagée à l'intérieur du premier rotor ;
la génératrice électrique présente un mode de fonctionnement dans lequel elle produit de l'énergie électrique par rotation relative d'un deuxième rotor (30) par rapport au premier rotor (60), le premier et le deuxième rotor étant en rotation par rapport à la structure à des vitesses de rotation respectives différentes ;
le deuxième rotor (30) est coaxial au premier rotor (60) et disposé à l'intérieur de celui-ci ;
une partie de la génératrice (50) fait partie du deuxième rotor ; et
la méthode comprend les étapes suivantes :
a) on transfère une chaleur produite par la génératrice à un fluide caloporteur en vaporisant le fluide dans un évaporateur (64 ;164) fixé sur une partie tournante de la génératrice solidaire en rotation du premier rotor ;
b) on transporte le fluide vaporisé jusqu'à un condenseur ;
c) on condense le fluide dans le condenseur, la chaleur fournie par le fluide étant transmise à l'air environnant le condenseur.

2. Méthode de refroidissement selon la revendication 1, suivant laquelle l'étape a) de transfert de chaleur est réalisée dans un évaporateur tournant faisant partie du premier rotor et l'étape c) de condensation de fluide est réalisée dans un condenseur (66;166) tournant faisant partie du premier rotor.

3. Dispositif comportant une structure fixe, un premier rotor (60) apte à être mis en rotation par rapport à la structure fixe, une génératrice électrique (50) prévue pour alimenter le premier rotor en énergie électrique, et un système de refroidissement (65 ;165) pour évacuer la chaleur produite par la génératrice électrique ; dans lequel
la génératrice électrique est disposée dans une chambre (62 ;162) aménagée à l'intérieur du premier rotor ;
la génératrice électrique présente un mode de fonctionnement dans lequel elle produit de l'énergie électrique par rotation relative d'un deuxième rotor (30) par rapport au premier rotor (60), le premier et le deuxième rotor étant en rotation par rapport à la structure à des vitesses de rotation respectives différentes ;
le deuxième rotor (30) est coaxial au premier rotor (60) et disposé à l'intérieur de celui-ci ;
une partie de la génératrice (50) fait partie du deuxième rotor ;
le système de refroidissement comprend un circuit de circulation d'un fluide caloporteur diphasique, reliant un évaporateur (64;164) couplé thermiquement à la génératrice électrique à un condenseur (66;166) apte à évacuer de la chaleur vers le milieu extérieur au premier rotor ; et l'évaporateur est fixé sur une partie tournante de la génératrice solidaire en rotation du premier rotor.

4. Dispositif selon la revendication 3, dans laquelle l'évaporateur (64;164) et le condenseur (66;166) est tournant et fait partie du premier rotor.

5. Dispositif selon la revendication 3 ou 4, dans laquelle le condenseur (166) et l'évaporateur (164) sont disposés de manière à être décalés radialement l'un par rapport à l'autre, l'évaporateur étant formé à une distance radiale par rapport à l'axe de rotation (A) supérieure à celle à laquelle est disposé le condenseur.

6. Dispositif selon l'une quelconque des revendications 3 à 5, dans le cas où le système de refroidissement tout entier est tournant et fait partie du premier rotor, dans lequel le premier rotor (60) comporte une partie tubulaire (18) contenant la chambre (62) ; et le système de refroidissement et éventuellement un rotor de la génératrice électrique sont fixés de manière à pouvoir être extraits via une extrémité de ladite partie tubulaire (18).

7. Dispositif selon l'une quelconque des revendications 3 à 6, dont la génératrice électrique et le système de refroidissement sont sans contact avec une paroi circonférentielle de la chambre (62,162).

8. Dispositif selon l'une quelconque des revendications 3 à 7, dont l'évaporateur comporte au moins un conduit de circulation de fluide, notamment en forme de spire, passant à l'intérieur de la génératrice électrique et permettant la circulation et la vaporisation du fluide.

9. Dispositif selon l'une quelconque des revendications 3 à 8, dans lequel l'évaporateur comprend au moins un passage de circulation de fluide (76) délimité par une paroi d'un carter externe de la génératrice (70) et permettant la circulation et la vaporisation du fluide.

10. Dispositif selon la revendication 9, dans lequel le carter présente une paroi double, et ledit au moins un passage est agencé entre une paroi interne (70I) et une paroi externe (70O) du carter.

11. Dispositif selon la revendication 9 ou 10, dans lequel l'évaporateur présente une pluralité de passages (76) parallèles à un axe (A) du carter et répartis sur la circonférence de celui-ci.

12. Dispositif selon l'une quelconque des revendications 3 à 11, dans lequel le premier rotor (60) est prévu pour être mis en rotation autour d'un axe de rotation (A) sensiblement vertical, et lorsqu'il est dans cette position, le condenseur (66) est disposé par rapport à la direction verticale au-dessus de l'évaporateur (64).

13. Dispositif selon l'une quelconque des revendications 3 à 12, dont le circuit de circulation de fluide présente un orifice de remplissage unique (75) pour le remplissage en fluide de l'ensemble du circuit de fluide.

## Patentansprüche

1. Verfahren zur Kühlung eines elektrischen Generators (50), der zur Versorgung eines ersten Rotors (60) mit elektrischer Energie vorgesehen ist, wobei der erste Rotor imstande ist, im Verhältnis zu einer festen Struktur in Rotation versetzt zu sein, wobei:
der elektrische Generator in einer Kammer (62; 162) angeordnet ist, die im Inneren des ersten Rotors eingerichtet ist;
der elektrische Generator eine Betriebsart aufweist, in der er elektrische Energie durch relative Rotation eines zweiten Rotors (30) im Verhältnis zum ersten Rotor (60) erzeugt, wobei der erste und der zweite Rotor im Verhältnis zu der Struktur in jeweilig unterschiedlichen Rotationsgeschwindigkeiten in Rotation sind;
der zweite Rotor (30) koaxial zum ersten Rotor (60) und im Inneren desselben angeordnet ist;
ein Teil des Generators (50) Teil des zweiten Rotors ist; und
das Verfahren die folgenden Schritte umfasst:
a) eine von dem Generator erzeugte Wärme an ein Wärmeträgerfluid durch Verdampfen des Fluids in einem Verdampfer (64; 164) übertragen wird, der auf einem drehenden Teil des Generators befestigt ist, das mit dem ersten Rotor fest verbunden ist;
b) das verdampfte Fluid bis zu einem Kondensator transportiert wird;
c) das Fluid in dem Kondensator kondensiert wird, wobei die von dem Fluid bereitgestellte Wärme an die den Kondensator umgebende Luft übertragen wird.

2. Kühlverfahren nach Anspruch 1, gemäß dem der Wärmeübertragungsschritt a) in einem drehenden Verdampfer durchgeführt wird, der Teil des ersten Rotors ist und der Fluidkondensationsschritt c) in einem drehenden Kondensator (66; 166) durchgeführt wird, der Teil des ersten Rotors ist.

3. Vorrichtung, die eine feste Struktur, einen ersten Rotor (60), der imstande ist, im Verhältnis zu der festen Struktur in Rotation versetzt zu sein, einen elektrischen Generator (50), der zur Versorgung des ersten Rotors mit elektrischer Energie vorgesehen ist und ein Kühlsystem (65; 165) zur Ableitung der von dem elektrischen Generator erzeugten Wärme aufweist; wobei
der elektrische Generator in einer Kammer (62; 162) angeordnet ist, die im Inneren des ersten Rotors eingerichtet ist;
der elektrische Generator eine Betriebsart aufweist, in der er elektrische Energie durch relative Rotation eines zweiten Rotors (30) im Verhältnis zum ersten Rotor (60) erzeugt, wobei der erste und der zweite Rotor im Verhältnis zu der Struktur in jeweilig unterschiedlichen Rotationsgeschwindigkeiten in Rotation sind;
der zweite Rotor (30) koaxial zum ersten Rotor (60) und im Inneren desselben angeordnet ist;
ein Teil des Generators (50) Teil des zweiten Rotors ist;
das Kühlsystem einen Zirkulationskreis eines zweiphasigen Wärmeträgerfluids umfasst, der einen Verdampfer (64; 164), der thermisch an den elektrischen Generator gekoppelt ist, mit einem Kondensator (66; 166) verbindet, der imstande ist, Wärme an die äußere Umgebung des ersten Rotors abzuleiten; und
der Verdampfer auf einem drehenden Teil des Generators befestigt ist, der mit dem ersten Rotor rotatorisch fest verbunden ist.

4. Vorrichtung nach Anspruch 3, wobei der Verdampfer (64; 164) und der Kondensator (66; 166) drehend sind und Teil des ersten Rotors sind.

5. Vorrichtung nach Anspruch 3 oder 4, wobei der Kondensator (166) und der Verdampfer (164) derart angeordnet sind, dass sie im Verhältnis zueinander radial versetzt sind, wobei der Verdampfer in einem radialen Abstand im Verhältnis zur Rotationsachse (A) ausgebildet ist, der größer als der ist, in dem der Kondensator angeordnet ist.

6. Vorrichtung nach einem der Ansprüche 3 bis 5, wenn das gesamte Kühlsystem drehend ist und Teil des ersten Rotors ist, wobei der erste Rotor (60) einen rohrförmigen Teil (18) aufweist, der die Kammer (62) enthält; und das Kühlsystem und eventuell ein Rotor des elektrischen Generators derart befestigt sind, das sie über ein Ende des rohrförmigen Teils (18) entnehmbar sind.

7. Vorrichtung nach einem der Ansprüche 3 bis 6, deren elektrischer Generator und das Kühlsystem ohne Kontakt mit einer Umfangswand der Kammer (62, 162) sind.

8. Vorrichtung nach einem der Ansprüche 3 bis 7, deren Verdampfer mindestens eine Fluidzirkulationsleitung, insbesondere in Windungsform, aufweist, die im Inneren des elektrischen Generators verläuft und die Zirkulation und die Verdampfung des Fluids erlaubt.

9. Vorrichtung nach einem der Ansprüche 3 bis 8, wobei der Verdampfer mindestens einen Fluidzirkulationsdurchgang (76) umfasst, der von einer Wand eines externen Gehäuses des Generators (70) begrenzt ist und die Zirkulation und die Verdampfung des Fluids erlaubt.

10. Vorrichtung nach Anspruch 9, wobei das Gehäuse eine doppelte Wand aufweist und der mindestens eine Durchgang zwischen einer Innenwand (70I) und einer Außenwand (70O) des Gehäuses eingerichtet ist.

11. Vorrichtung nach Anspruch 9 oder 10, wobei der Verdampfer eine Vielzahl von Durchgängen (76) aufweist, die zu einer Achse (A) des Gehäuses parallel und auf dem Umfang desselben verteilt sind.

12. Vorrichtung nach einem der Ansprüche 3 bis 11, wobei der erste Rotor (60) vorgesehen ist, um um eine etwa vertikale Rotationsachse (A) in Rotation versetzt zu werden, und wenn er in dieser Position ist, der Kondensator (66) im Verhältnis zur vertikalen Richtung oberhalb des Verdampfers (64) angeordnet ist.

13. Vorrichtung nach einem der Ansprüche 3 bis 12, deren Fluidzirkulationskreis eine einzige Einfüllöffnung (75) zum Befüllen des gesamten Fluidkreises mit Fluid aufweist.

## Claims

1. A method for cooling an electricity generator (50) for delivering electricity to a first rotor (60), the first rotor being suitable for being rotated relative to a stationary structure, wherein:
the electricity generator is arranged in a chamber (62; 162) arranged inside the first rotor;
the electricity generator presents a mode of operation in which it produces electricity by rotation of a second rotor (30) relative to the first rotor (60), the first and second rotors rotating relative to the structure at respective different speeds of rotation;
the second rotor (30) is coaxial with the first rotor (60) and arranged inside it;
a portion of the generator (50) forms a portion of the second rotor; and
the method comprises the following steps:
a) transferring heat produced by the generator to a cooling fluid, thereby vaporizing the fluid in an evaporator (64; 164) fastened to a rotary portion of the generator that is constrained to rotate with the first rotor;
b) transporting the vaporized fluid to a condenser;
c) condensing the fluid in the condenser, the heat delivered by the fluid being transmitted to the air surrounding the condenser.

2. A cooling method according to claim 1, wherein the heat transfer step a) is performed in a rotary evaporator forming part of the first rotor and the fluid condensation step c) is performed in a rotary condenser (66; 166) forming part of the first rotor.

3. A device comprising a stationary structure, a first rotor (60) suitable for being rotated relative to the stationary structure, an electricity generator (50) for delivering electricity to the first rotor, and a cooling system (65; 165) for discharging the heat produced by the electricity generator; wherein
the electricity generator is arranged in a chamber (62; 162) arranged inside the first rotor;
the electricity generator presents a mode of operation in which it produces electricity by rotation of a second rotor (30) relative to the first rotor (60), the first and second rotors rotating relative to the structure at respective different speeds of rotation;
the second rotor (30) is coaxial with the first rotor (60) and arranged inside it;
a portion of the generator (50) forms a portion of the second rotor;
the cooling system comprises a circuit for circulating a two-phase cooling fluid, the circuit connecting an evaporator (64; 164) that is thermally coupled to the electricity generator to a condenser (66; 166) that is suitable for discharging heat to the medium outside the first rotor; and
the evaporator is fastened to a rotary portion of the generator that is constrained to rotate with the first rotor.

4. A device according to claim 3, wherein the evaporator (64; 164) and the condenser (66; 166) are rotary and form part of the first rotor.

5. A device according to claim 3 or claim 4, wherein the condenser (166) and the evaporator (164) are arranged so as to be radially offset relative to each other, the evaporator being formed at a radial distance from the axis of rotation (A) that is greater than the radial distance at which the condenser is arranged.

6. A device according to any one of claims 3 to 5, where the cooling system as a whole is rotary, forming part of the first rotor, wherein the first rotor (60) has a tubular portion (18) containing the chamber (62); and the cooling system, and possibly also a rotor of the electricity generator, is/are fastened in such a manner as to be capable of being extracted via an end of said tubular portion (18).

7. A device according to any one of claims 3 to 6, wherein the electricity generator and the cooling system are not in contact with a circumferential wall of the chamber (62, 162).

8. A device according to any one of claims 3 to 7, wherein the evaporator includes at least one fluid circulation duct, in particular shaped as a loop of a coil, passing inside the electricity generator and enabling the fluid to circulate and vaporize.

9. A device according to any one of claims 3 to 8, wherein the evaporator comprises at least one fluid circulation passage (76) defined by a wall of an outer casing of the generator (70) and enabling the fluid to circulate and vaporize.

10. A device according to claim 9, wherein the casing presents a double wall, and said at least one passage is arranged between an inner wall (701) and an outer wall (70O) of the casing.

11. A device according to claim 9 or claim 10, wherein the evaporator presents a plurality of passages (76) parallel to an axis (A) of the casing and distributed around its circumference.

12. A device according to any one of claims 3 to 11, wherein the first rotor (60) is designed to be rotated about an axis of rotation (A) that is substantially vertical, and when in this position, the condenser (66) is arranged above the evaporator (64) relative to the vertical direction.

13. A device according to any one of claims 3 to 12, having its fluid circulation circuit presenting a single filling orifice (75) for filling the entire fluid circuit with fluid.
